(19) Europäisches Patentamt
European Patent Office
Office européen des brevets

(11) Veröffentlichungsnummer: **0 189 081**
**B1**

(12) # EUROPÄISCHE PATENTSCHRIFT

(45) Veröffentlichungstag der Patentschrift: **15.02.89**

(51) Int. Cl.⁴: **C 09 B 62/028**, D 06 P 1/382

(21) Anmeldenummer: **86100350.7**

(22) Anmeldetag: **13.01.86**

(54) **Azo-Reaktivfarbstoffe.**

(30) Priorität: **23.01.85 DE 3502104**

(43) Veröffentlichungstag der Anmeldung: **30.07.86 Patentblatt 86/31**

(45) Bekanntmachung des Hinweises auf die Patenterteilung: **15.02.89 Patentblatt 89/7**

(84) Benannte Vertragsstaaten: **CH DE FR GB LI**

(56) Entgegenhaltungen:
**EP-A-0 131 542**
**JP-A-60 011 559**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**

**EP 0 189 081 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Gegenstand der Erfindung sind neue Azo-Reaktivfarbstoffe der allgemeinen Formel

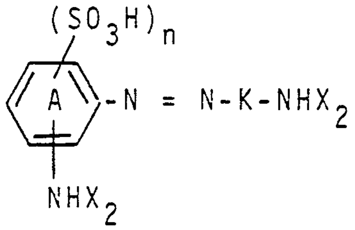

(1)

worin

n = 1 oder 2

-K- =

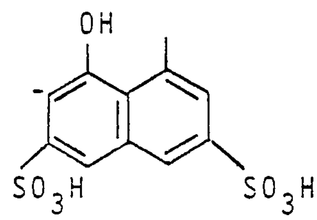

oder

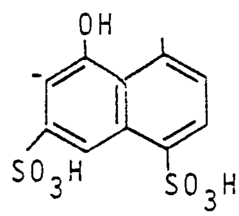

oder

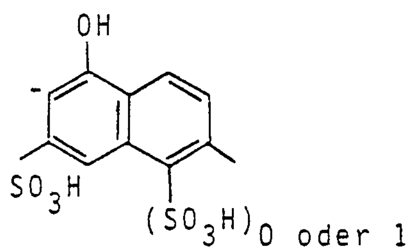

$X_2$ =

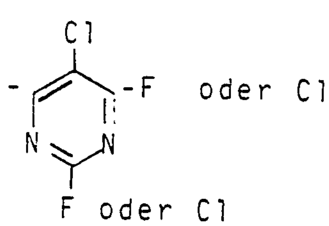

mit der Maßgabe, daß $X_2$ mindestens ein unter Färbebedingungen abspaltbares Fluoratom enthält, und worin der Benzolrest A noch weiter substituiert sein kann.

Bevorzugte Farbstoffe im Rahmen der Formel (1) sind Farbstoffe der Formel

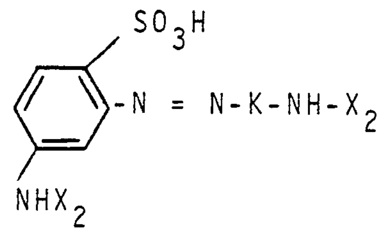

(2)

Ein weiterer Gegenstand der Erfindung sind Farbstoffe der Formel

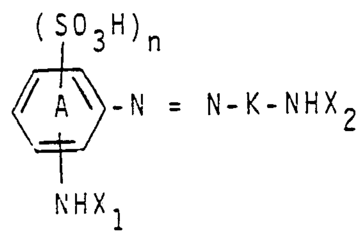

(3)

worin

K =

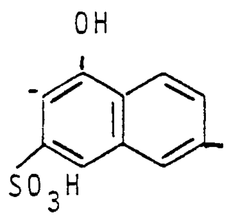

n = 1 oder 2

$X_1$ =

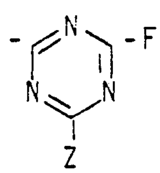

worin

Z = eine gegebenenfalls substituierte Aminogruppe $Z_1$, $Z_2$, $Z_3$, $Z_4$ oder $Z_5$ ist, wobei

$Z_1$ =

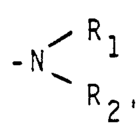

worin

$R_1$, $R_2$ = H oder gegebenenfalls durch OH, $OCH_3$, $OC_2H_5$, COOH, $SO_3H$, $OSO_3H$ substituiertes $C_1$-$C_4$-Alkyl,

$Z_2$ =

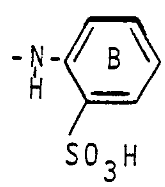

, worin

der Benzolring B gegebenenfalls durch Br, Cl, $CH_3$, $C_2H_5$, $OCH_3$, $OC_2H_5$, $SO_3H$, COOH, $NHCOCH_3$, $NHCONH_2$ substituiert sein kann,

$Z_3$ = 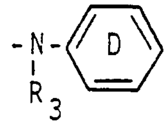

$R_3$ = gegebenenfalls durch OH, $OCH_3$, CN, $OSO_3H$ substituiertes $C_1$-$C_4$-Alkyl und der Benzolring D gegebenenfalls durch $CH_3$ oder $C_2H_5$ substituiert sein kann.

$Z_4$ = 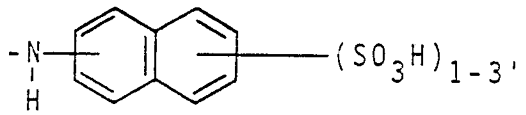

$Z_5$ = 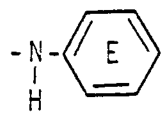 , worin

der Benzolring E gegebenenfalls durch Cl, Br, $CH_3$, $C_2H_5$, $OCH_3$, $OC_2H_5$, COOH, $SO_3H$ (die Sulfogruppe steht in m- oder p-Stellung zur Aminogruppe), $NHCOCH_3$, $NHCONH_2$ substituiert sein kann und

$X_2$ = die in Anspruch 1 angegebene Bedeutung hat, und worin der Benzolrest A noch weiter substituiert sein kann.

Beispiele für derartige Substituenten: $CH_3$, $OCH_3$, Cl, COOH.

Bevorzugte Farbstoffe im Rahmen der Formel (3) sind Farbstoffe der Formel

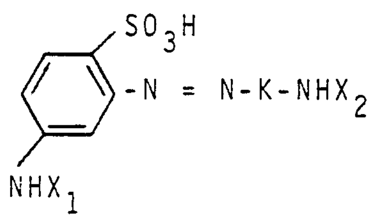 (4)

Aus EP-A-0 131 542 sowie JP-A-60 011 559 sind bereits ähnliche Farbstofftypen bekannt.

In der erstgenannten Patentpublikation werden jedoch nur Farbstoffe beschrieben, die zwei Fluortriazinyl-Reste aufweisen. Ein Hinweis auf Farbstoffe mit zwei Fluorpyrimidinyl-Resten fehlt ebenso wie ein Hinweis auf Farbstoffe mit einem Fluorpyrimidinyl-Rest und einem Fluortriazinyl-Rest.

In der zweiten Literaturstelle werden zwar Farbstoffe mit Fluortriazinyl-Rest und Fluorpyrimidinylrest beschrieben, im Bereich der hier beanspruchten Farbstoffe auf Basis I-Säurekupplungskomponente jedoch wiederum nur solche, die den Fluortriazinyl-Rest in der Kupplungskomponente und den Fluorpyrimidinylrest in der Diazokomponente enthalten. Ein Hinweis auf die Vertauschung der beiden Reaktivgruppen gerade bei I-Säure-Farbstoffen findet sich nirgendwo.

Beispiele für Aminreste Z sind folgende:

$Z_1$: $NH_2$, $NHCH_3$, $NHC_2H_5$, $N(CH_3)_2$, $N(C_2H_5)_2$, $NHCH_2CH_2OCH_3$, $NHCH_2CH_2OH$, $N(CH_2CH_2OH)_2$, $NHCH_2COOH$, $NHCH_2CH_2SO_3H$, $NHCH_2CH_2OSO_3H$, 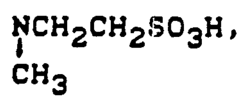,

$Z_2$: 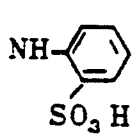 , 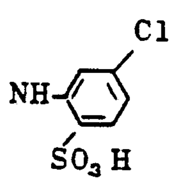 , 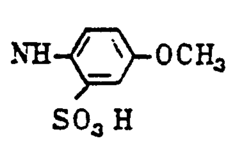

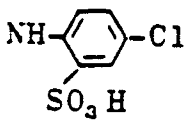 , 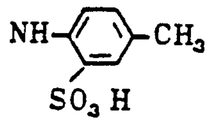 , 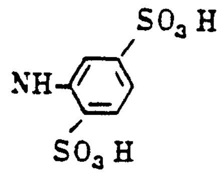 ,

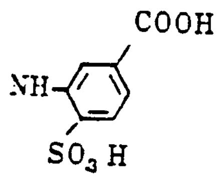

$Z_3$: 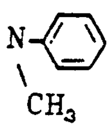 , 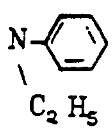 , 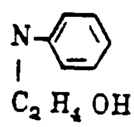 , 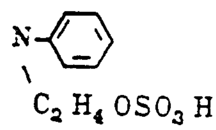

$Z_4$: 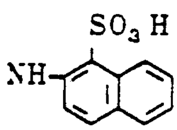 , 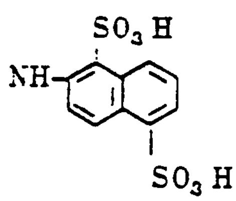 , 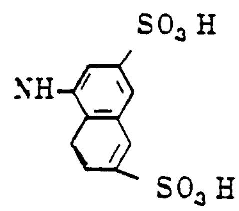

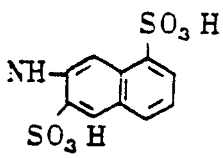 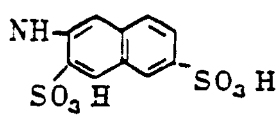

$Z_5$:

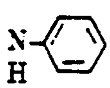 , 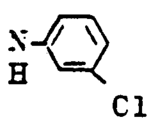 , 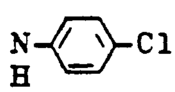 , 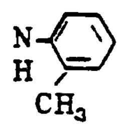 , 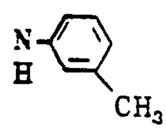

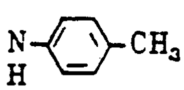 , 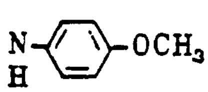 , 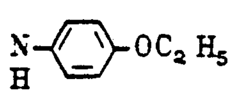 , 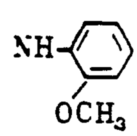

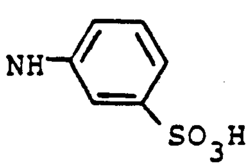

Beispiele für $X_2$ sind:

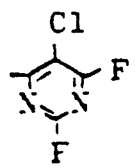 , 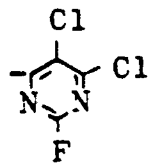 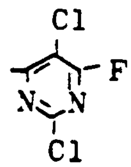

Die Herstellung der Farbstoffe der Formel (1) erfolgt auf folgende Weise:
a) Diazokomponenten der Formel

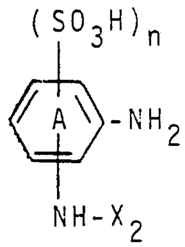

(5)

werden diazotiert und mit Kupplungskomponenten der Formel

$H\text{-}K\text{-}NH\text{-}X_2$ (6)

im schwach sauren bis schwach alkalischen Medium vereinigt.
b) Farbstoffe der Formel

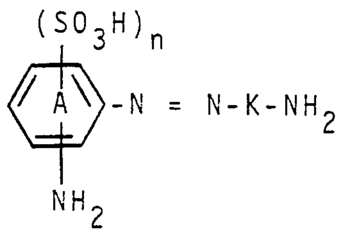

(7)

werden mit 2 Mol der Reaktivkomponente der Formel

$F\text{-}X_2$ F = abspaltbares Fluoratom)

unter Abspaltung von 2 Mol Flußsäure kondensiert.
Die Herstellung der Diazo- bzw. Kupplungskomponenten (5) bzw. (6) geschieht dadurch, daß man Diaminobenzolsulfonsäuren der Formel

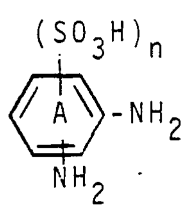

(8)

selektiv an einer Aminogruppe bzw. Kupplungskomponenten der Formel

$H\text{-}K\text{-}NH_2$ (9)

mit einer Reaktivkomponenten $X_2$-F acyliert.
Die Herstellung der Farbstoffe der Formel (3) erfolgt auf folgendem Wege:
Diazokomponenten der Formel

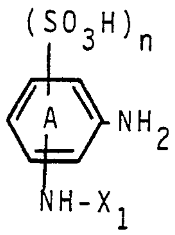

(10)

werden diazotiert und mit Kupplungskomponenten der Formel

$H-K-NH-X_2$ (11

im schwach sauren bis schwach alkalischen Medium vereinigt.

Die Herstellung der Diazokomponenten (1) geschieht dadurch, daß man Diaminobenzolsulfonsäuren der Formel (8) selektiv an einer Aminogruppe mit einer Reaktivkomponente $X_1$-F kondensiert.

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffe und Farbstoffzwischenprodukte vorzugsweise im wäßrigen Medium.

Die Umsetzung mit fluorhaltigen Heterocyclen erfolgt bei schwach saurem bis schwach alkalischem pH-Wert. Die bei der Kondensation freiwerdende Fluorwasserstoffsäure wird durch Zugabe von verdünnter Alkalihydroxid- bzw. -carbonat- oder -bicarbonat-Lösung neutralisiert.

Als Ausgangsverbindungen zur Herstellung der Reaktivfarbstoffe der Formel (1) können beispielsweise genannt werden:

a) Kupplungskomponenten der Formel (9)

1-Amino-8-hydroxynaphthalin-3,6-disulfonsäure (H-Säure), 1-Amino-8-hydroxynaphthalin-4,6-disulfonsäure (K-Säure), 2-Amino-5-hydroxynaphthalin-7-sulfonsäure (I-Säure), 2-Amino-5-hydroxynaphthalin-1,7-disulfonsäure (Sulfo-I-Säure),

b) Diaminobenzolsulfonsäuren der Formel (8)

1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure- 1,5-Diamino-6-methylbenzol-3-sulfonsäure, 1,3-Diamino-6-methylbenzol-4-sulfonsäure, 1,4-Diamino-6-chlorbenzol-2-sulfonsäure,

c) Fluorheterocyclen der Formeln $X_1F/X_2F$

2-4-Difluor-6-(o-, m-, p-methyl-phenyl)-amino-triazin, 2,4-Difluor-6-(o-, m-, p-sulfophenyl)-amino-triazin, 2,4-Difluor-6-(2',5' -disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Diflour-6-(2'-methoxy-4'-sulfophenyl)-amino-triazin, 2-4-Di-fluor-6-(o-, m-, p-carboxy-phenyl)-amino-triazin, 2,4-Difluor-6-(N-methyl-phenyl)-amino-triazin- 2,4-Difluor-6-(N-ethyl-phenyl-amino-triazin, 2,4-Di-fluor-6- (N- isopropyl-phenyl) -amino-triazin, 2,4-Difluor-6- (2,4-Difluor-6-(2'-4'-disulfophenyl)-amino-triazin, 2,4-Difluor-6-(3'-,5'-disulfophenyl)-amino-triazin, 2,4-Difluor-6-(2'-carboxy-4'-sulfo phenyl)-amino-triazin, 2,4-Difluor-6-(2'- ,5'-disulfo-4-methoxyphenyl)-amino-triazin, 2,4-Difluor-(2'-methyl-4',6'-disulfophenyl)-amino-triazin, 2,4-Difluor-(6',8-disulfonaphthyl-(2'))-amino-triazin, 2-4-Difluor-(4',8'-disulfonaphthyl-(2'))-amino-triazin, 2,4-Difluor-(4',6',8'-trisulfo-naphthyl-(2'))-amino-triazin, 2,4-Difluor-(3'-,6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxy-ethyl-amino-triazin, 2,4-Difluor-6-dimethylamino-triazin, 2,4-Difluor-6-diethylamino-triazin, 2,4-Difluor-6-isopropyl-amino-triazin, 2,4,6-Trifluor-5-chlorpyrimidin, 2,4-Difluor-5-6-dichlor-pyrimidin, 4,6-Difluor-2,5-dichlor-pyrimidin.

Die neuen Reaktivfarbstoffe können isoliert und zu trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet verden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die neuen Reaktivfarbstoffe zeichnen sich durch hohe Reaktivität aus, und sie ergeben Färbungen mit guten

Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen.

Die neuen Reaktivfarbstoffe eignen sich zum Färben und Bedrucken der verschiedensten hydroxylgruppen- oder amidgruppenhaltigen Substrate, wie Seide, Leder, Wolle, Superpolyamidfasern und Superpolyamidurethanen, insbesondere aber cellulosehaltiger Materialien faseriger Struktur, wie Leinen, Zellstoff, regeneriertes Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

Die in den Beispielen genannten Gewichte beziehen sich auf die freie Säure. Die in den Beispielen angegebenen Farbkennzahlen beziehen sich auf Colour Index Hue Indication Chart (Indicator Numbers).

**Beispiel 1**

a) Herstellung der Kupplungskomponente

23,9 g I-Säure werden in 150 ml Wasser bei pH 5.5 - 4.5 in üblicher Weise mit 16,9 g Trifluor-5-chlor-pyrimidin acyliert, wobei man den pH-Wert durch fortlaufende Zugabe von 10 %-iger Natriumyhdroxidlösung einstellt. Man prüft dann auf nicht umgesetzt I-Säure. Gegebenfalls muß noch 0,5 bis 1 g Reaktivkomponente nachgesetzt werden.

b) Herstellung der Diazokomponente

19,0 g 2-Aminobenzol-1-sulfonsäure werden in 400 ml Eiswasser bei pH 6,5 gelöst. Man gibt 1 g Dinatriumphosphat zu und tropft in 10 Minuten bei 0°C 16,2 g Trifluortriazin ein, wobei der pH durch gleichzeitige Zugabe von 10-%-iger Natronlauge zwischen 6 und 7 gehalten wird. Sobald kein Alkaliverbrauch mehr feststellbar ist, versetzt man das Reaktionsgemisch mit einer neutralen Lösung von 18,8 g 1,3-Diaminobenzol-4-sulfonsäure in 100 ml Wasser, der pH-Wert wird durch Eintropfen von 10-%-iger Natronlauge zwischen 6,5 und 7,5 gehalten. Man kondensiert zunächst 30 Minuten bei 0 - 5°C und läßt dann die Temperatur in 30 Minuten auf 10 - 15°C ansteigen.

c) Diazotierung und Kupplung

Die nach b) erhaltene Lösung wird bei pH 7 mit 7 g Natriumnitrit versetzt und in 30 Minuten in eine Vorlage aus 28 ml konzentrierter Salzsäure, 150 ml Wasser und 200 g Eis getropft. Man rührt 1 Stunde nach und entfernt den geringen Überschuß an Nitrit mit Amidosulfonsäure.

Man läßt dann die Suspension in 30 Minuten in die nach a) erhaltene Lösung einlaufen, wobei man durch gleichzeitiges Einstreuen von Natriumbicarbonat den pH-Wert hält. Nach beendeter Kupplung wird der Farbstoff mit Kochsalz ausgesalzen, abgesaugt, getrocknet und gemahlen. Man erhält ein hellrotes Pulver, das Baumwolle in einem gelbst. orange Ton (Farbkennzahl 4) nach einem für Reaktivfarbstoffe üblichen Verfahren färbt.

Der Farbstoff entspricht der Formel

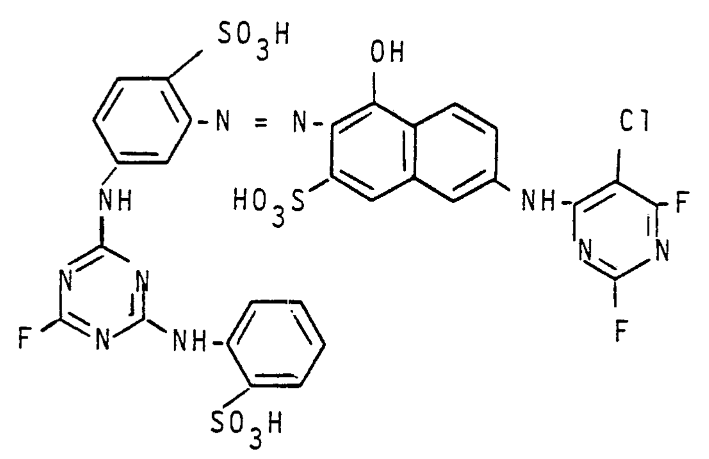

Farbstoffe mit ähnlichen Eigenschaften werden erhalten, wenn man anstelle der in Beispiel 1 aufgeführten Verbindungen äquivalente Mengen der in der nachfolgenden Tabelle 1 aufgeführten Komponenten verwendet und im übrigen gemäß dem Beispiel 1 verfährt.

In den Tabellenbeispielen werden folgende Abkürzungen verwendet:
Aminohydroxynaphthalin-sulfonsäure (AHNS)

D 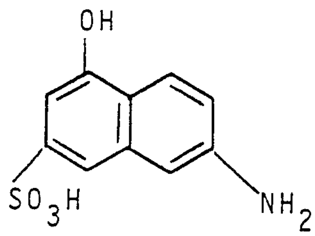

Diaminobenzolsulfonsäuren (DBS)

I 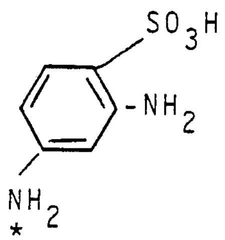

II 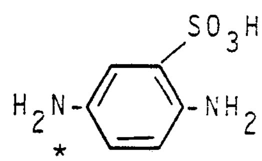

III 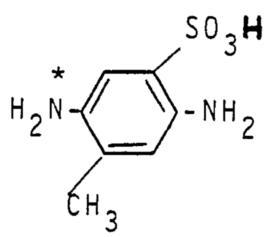

IV 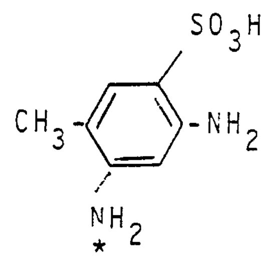

Die Acylierung findet jeweils an der mit einem Stern gekennzeichenten Aminogruppe statt.

Tabelle 1

| Beispiel | DBS | Diazokomponente Amin | AHNS | Kupplungskomponente Reaktivkomponente | Farbton | Farbkennzahl |
|---|---|---|---|---|---|---|
| 1 | I | 2-Aminonapthalin-1-sulfonsäure (Herstellung der Diazokomponente erfolgt nach den Angaben vom Beispiel 1 der EP 0 122 881) | D | Gemisch aus 70 Teilen 4,6-Difluor-2,5-dichlorpyrimidin und 30 Teilen 2,4-Difluor-5,6-dichlorpyrimidin | gelbst. orange | 4 |
| 2 | II | o-Sulfanilsäure | D | 2,4,6-Trifluor-5-chlor-pyrimidin | gelbst. rot | 7 |
| 3 | III | " | D | " | " | 7 |
| 4 | IV | " | D | " | gelbst. orange | 6 |

**Beispiel 2**

a) Herstellung der Kupplungskomponente

31,9 g H-Säure werden in 150 ml Wasser bei pH 10 gelöst. Man kühlt auf 10° ab und läßt in 30 Minuten 18,5 g eines Gemisches aus 70 % 4,6-Difluor-2,5-dichlor-pyrimidin und 30 % 2,4-Difluor-5-,6-dichlor-pyrimidin eintropfen und hält dabei den pH-Wert durch fortlaufende Zugabe von 10 %-iger Natriumhydroxidlösung bei 10. Man rührt 30 Minuten bei pH 10 nach und prüft dann auf nicht umgesetzte H-Säure. Gegebenfalls muß noch 0,5 bis 1 g des Gemisches der Reaktionskomponenten nachgesetzt werden.

b) Herstellung der Diazokomponente

18,8 g 1,3-Diaminobenzol-4-sulfonsäure werden in 200 ml Eiswasser neutral gelöst. In 30 Minuten tropft man 16,9 g 2,4,6-Trifluor-5-chlor-pyrimidin ein, wobei man durch gleichzeitige Zugabe von 10-%-iger Natronlauge den pH-Wert zwizchen 6 und 7 hält. Nach beendeter Kondensation wird das Zwischenprodukt durch Zugabe von Kochsalz ausgesalzen und abgesaugt. Die Ausbeute ist nahezu quantitativ.

c) Diazotierung und Kupplung

Die nach b) erhaltene wasserfeuchte Paste wird in 700 ml Wasser verrührt und vorsichtig erwärmt bis eine klare

Lösung entstanden ist. Man setzt dann bei pH 7 7 g Natriumnitrit zu und läßt die Lösung innerhalb 30 Minuten in eine Vorlage aus 28 ml konzentrierter Salzsäure, 200 ml Wasser und 300 g Eis einlaufen, wobei man, um eine Überschreitung der Temperatur von 10°C zu vermeiden, gegebenenfalls noch Eis einwirft. Man rührt 60 Minuten nach und entfernt den Überschuß an Nitrit mit Amidosulfonsäure. Die resultierende gelbgrüne Suspension der Diazoverbindung läßt man in die nach a) hergestellte Lösung der Kupplungskomponente einlaufen,

wobei man durch gleichzeitiges Einstreuen von Natriumbicarbonat den pH-Wert im Bereich von 6,5 - 7,5 hält. Nach beendeter Kupplung wird der Farbstoff abgesaugt, getrocknet und gemahlen. Man erhält ein dunkelrotes Pulver, das Baumwolle nach einem der für Reaktivfarbstoffe üblichen Applikationsverfahren in klaren roten Tönen färbt (Farbkennzahl 8).

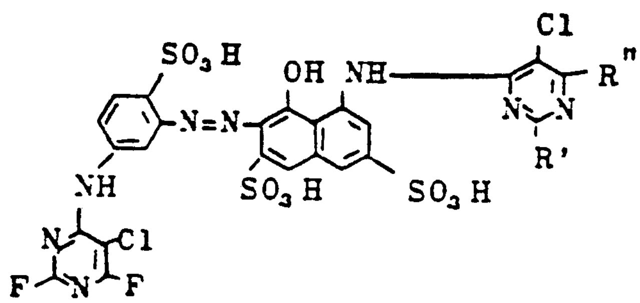

70 %: R' = Cl, R'' = F

30 %: R'' = F, R'' F = Cl

Farbstoffe mit ähnlichen Eigenschaften werden erhalten, wenn man anstelle der in Beispiel 2 verwendeten H-Säure äquivalente Mengen an K-Säure (Farbkennzahl 7) und Sulfo-I-Säure (Farbkennzahl 4) verwendet.

**Patentansprüche**

1. Azo-Reaktivfarbstoffe der allgemeinen Formel

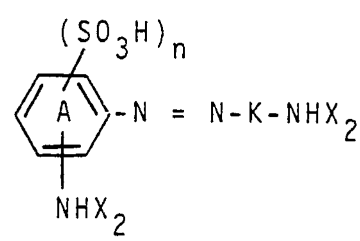

worin
n = 1 oder 2

-K- = 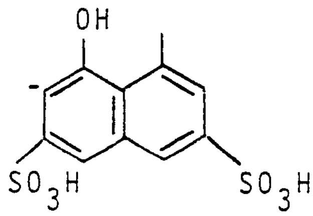 oder

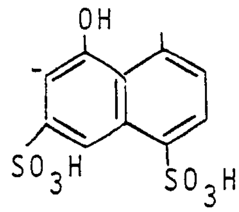 oder

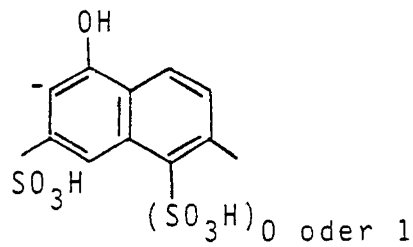

$X_2$ = 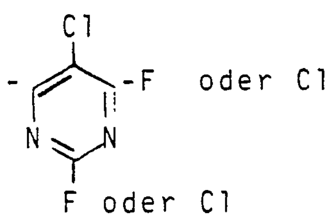

mit der Maßgabe, daß $X_2$ mindestens ein unter Färbebedingungen abspaltbares Fluoratom enthält, und worin der Benzolrest A noch weiter substituiert sein kann.

2. Farbstoffe des Anspruchs 1 der Formel

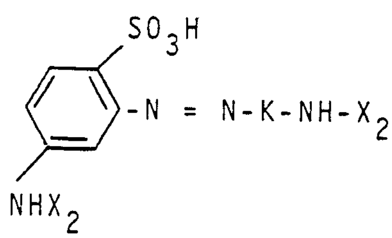

3. Azo-Reaktivfarbstoffe der allgemeinen Formel

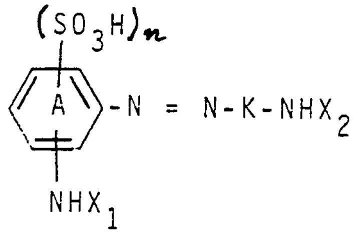

worin

K =

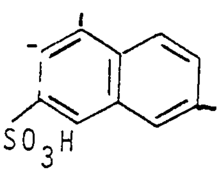

n = 1 oder 2

$X_1$ =

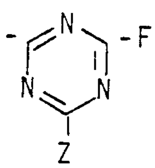

worin

Z = eine gegebenenfalls substituierte Aminogruppe $Z_1$, $Z_2$, $Z_3$, $Z_4$ oder $Z_5$ ist, wobei

$Z_1$ =

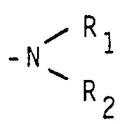

worin
$R_1$, $R_2$ = H oder gegebenenfalls durch OH, $OCH_3$, $OC_2H_5$, COOH, $SO_3H$, $OSO_3H$ substituiertes $C_1$-$C_4$-Alkyl,

$Z_2$ =

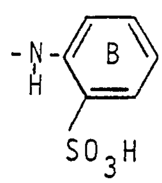

, worin

der Benzolring B gegebenenfalls durch Br, Cl, $CH_3$, $C_2H_5$, $OCH_3$, $OC_2H_5$, $SO_3H$, COOH, $NHCOCH_3$, $NHCONH_2$ substituiert sein kann,

$Z_3$ = 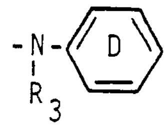

$R_3$ = gegebenenfalls durch OH, $OCH_3$, CN, $OSO_3H$ substituiertes $C_1$-$C_4$-Alkyl und der Benzolring D gegebenenfalls durch $CH_3$ oder $C_2H_5$ substituiert sein kann.

$Z_4$ = 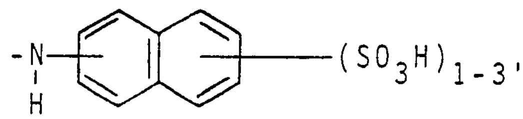

$Z_5$ = 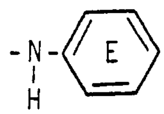 , worin

der Benzolring E gegebenenfalls durch Cl, Br, $CH_3$, $C_2H_5$, $OCH_3$, $OC_2H_5$, COOH, $SO_3H$ (die Sulfogruppe steht in m- oder p-Stellung zur Aminogruppe), $NHCOCH_3$, $NHCONH_2$ substituiert sein kann und

$X_2$ = die in Anspruch 1 angegebene Bedeutung hat,

und worin der Benzolrest A noch weiter substituiert sein kann.

4. Farbstoffe des Anspruchs 3 der Formel

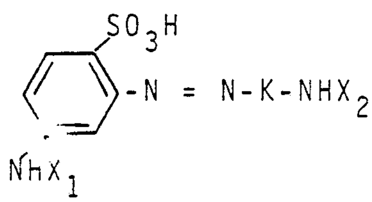 .

5. Verwendung der Farbstoffe der Ansprüche 1 - 4 zum Färben und Bedrucken von hydroxylgruppen- und amidgruppenhaltigen Materialien.

## Claims

1. Azoreactive dyestuffs of the general formula

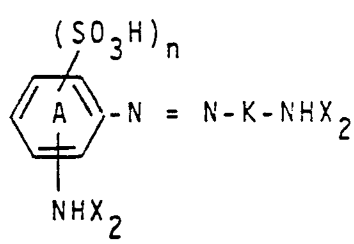

wherein

n = 1 or 2,

-K- = 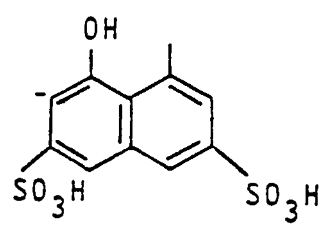 or

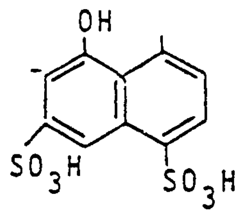

or

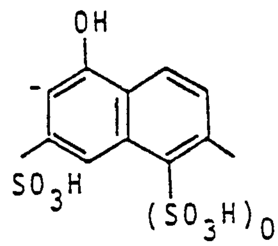

or 1

$X_2$ = 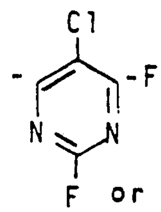 or Cl

or Cl

with the proviso that $X_2$ contains at least one fluorine atom which can be split off under dyeing conditions, and wherein
the benzene radical A can also be further substituted.

2. Dyestuffs of Claim 1, of the formula

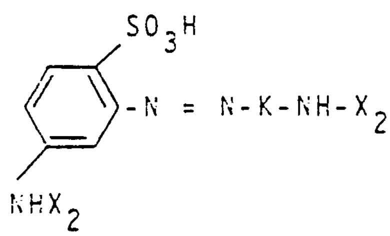

3. Azo reactive dyestuffs of the general formula

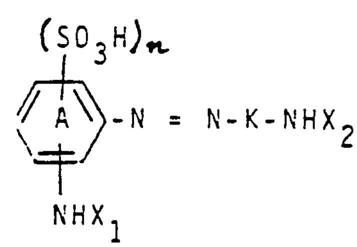

wherein

$K =$ 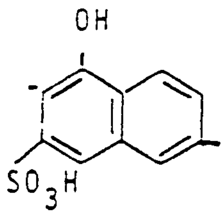

$n = 1$ or 2

$X_1 =$ 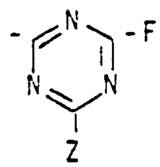

wherein
Z = an optionally substituted amino group $Z_1$, $Z_2$, $Z_3$, $Z_4$ or $Z_5$,

$Z_1 =$ 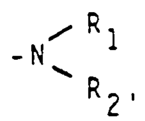

wherein
$R^1$ and $R^2$ = H or $C_1$-$C_4$-alkyl optionally substituted by OH, $OCH_3$, $OC_2H_5$, COOH, $SO_3H$ or $OSO_3H$,

$Z_2 =$ 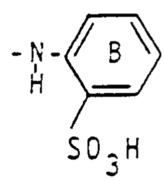

wherein
the benzene ring B can optionally be substituted by Br, Cl, $CH_3$, $C_2H_5$, $OCH_3$, $OC_2H_5$, $SO_3H$, COOH, $NHCOCH_3$ or $NHCONH_2$,
wherein

$Z_3 =$ 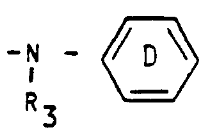

wherein
$R_3$ = $C_1$-$C_4$-alkyl optionally substituted by OH, $OCH_3$, CN or $OSO_3H$ and
the benzene ring D can optionally be substituted by $CH_3$ or $C_2H_5$,

$Z_4 =$ 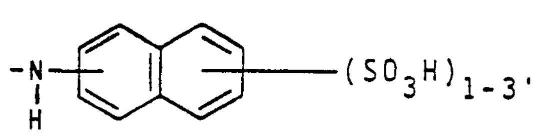

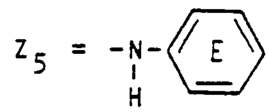

wherein
the benzene ring E can optionally be substituted by Cl, Br, $CH_3$, $C_2H_5$, $OCH_3$, $OC_2H_5$, COOH, $SO_3H$ (the sulpho group is in the m- or p-position relative to the amino group), $NHCOCH_3$ or $NHCONH_2$, and
$X_2$ the meaning given in Claim 1, and
wherein
the benzene radical A can also be further substituted.

4. Dyestuffs of Claim 3, of the formula

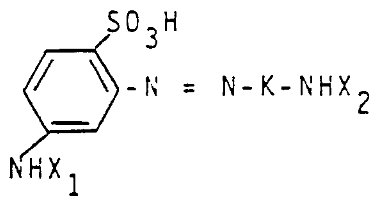

5. Use of the dyestuffs of Claims 1 - 4 for dyeing and printing materials containing hydroxyl groups or amide groups.

## Revendications

1. Colorants azoïques réactifs de formule générale

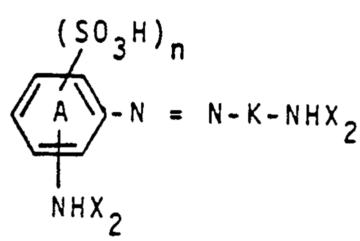

dans laquelle
n = 1 ou 2

-K- =

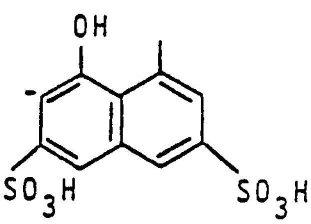

ou

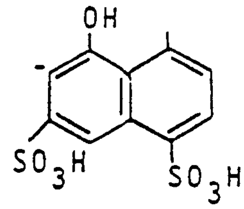

ou

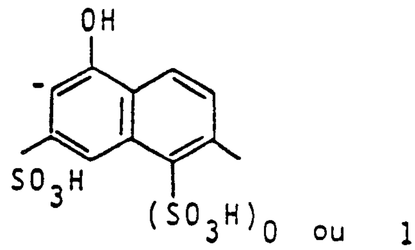

$X_2$ = 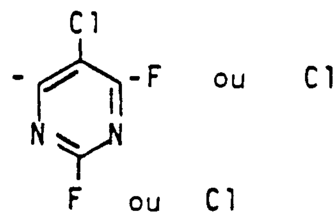

sous réserve que $X_2$ contienne au moins un atome de flour éliminable dans les conditions de la teinture, le cycle benzénique A pouvant encore porter d'autres substituants.

2. Colorants de la revendication 1, de formule

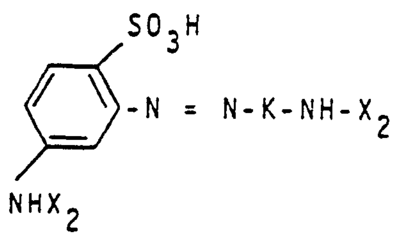

3. Colorants azoïques réactifs de formule générale

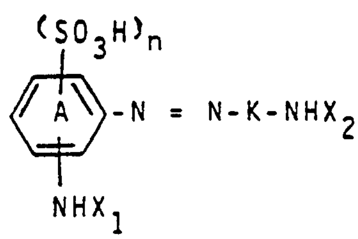

dans laquelle

K = 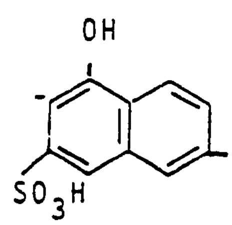

n = 1 ou 2

$X_1$ = 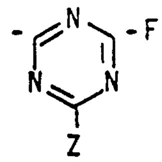 dans lequel

Z = un groupe amino éventuellement substitué $Z_1$, $Z_2$, $Z_3$, $Z_4$ ou $Z_5$, dans lequel

$Z_1$ = 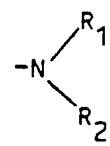

dans lequel
$R_1$ et $R_2$ = H ou alkyle en $C_1$-$C_4$ éventuellement substitué par OH, $OCH_3$, $OC_2H_5$, COOH, $SO_3H$, $OSO_3H$,

$Z_2$ = 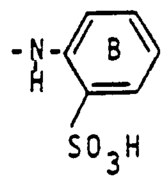 , dans lequel

le cycle benzénique B peut éventuellement être substitué par Br, Cl, $CH_3$, $C_2H_5$, $OCH_3$, $OC_2H_5$, $SO_3$, COOH, $NHCOCH_3$, $NHCONH_2$,

$Z_3$ = 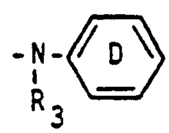

$R_3$ = alkyle en $C_1$-$C_4$ éventuellement substitué par OH, $OCH_3$, CN, $OSO_3H$ et le cycle benzénique D peut éventuellement être substitué par $CH_3$ ou $C_2H_5$,

$Z_4$ = 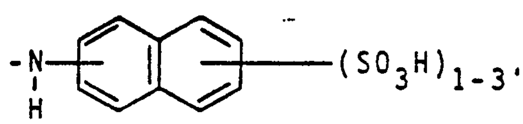

$Z_5$ = 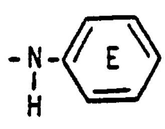 , dans lequel

le cycle benzénique E peut éventuellement être substitué par Cl, Br, $CH_3$, $C_2H_5$, $OC_3$, $OC_2H_5$, COOH, $SO_3H$ (le groupe sulfo est en position m ou p par rappor au groupe amino), $NHCOCH_3$, $NHCONH_2$, et $X_2$ a les significations indiquées dans la revendication 1,
et le cycle benzenique A peut encore porter d'autres substituants.

4. Colorants de la revendication 3, de formule

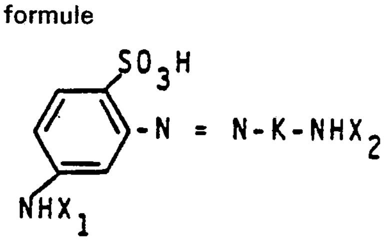

5. Utilisation des colorants des revendications 1 à 4 pour la teinture et l'impression de matières contenant des groupes hydroxy et des groupes amide.